# DEMANDE DE BREVET EUROPEEN

(11) **EP 3 564 841 A1**
(43) Date de publication de la demande: **06.11.2019**
(21) Numéro de dépôt: 19171706.5
(22) Date de dépôt: 29.04.2019
(51) Int. Cl.: G06F 21/44, H04L 9/08, H04L 9/32

(54) **AUTHENTIFICATION D'UN CIRCUIT ÉLECTRONIQUE**

(30) Priorité: 03.05.2018 FR 1853818
(71) Demandeur: PROTON WORLD INTERNATIONAL N.V., 1831 Diegem (BE)
(72) Inventeur: MODAVE, Jean-Louis, 1340 OTTIGNIES (BE); PEETERS, Michael, 1320 TOURINNES-LA-GROSSE (BE)
(74) Mandataire: Cabinet Beaumont

(57) **Abrégé**

La présente description concerne un procédé d'authentification d'un premier circuit électronique par un deuxième circuit électronique, dans lequel le premier circuit génère une première valeur (SecVal(i)), à partir d'une deuxième valeur (i ; PubVal(i)) reçue du deuxième circuit et d'une troisième valeur (Seed(j)) contenue dans une première mémoire non volatile à lecture destructrice.

## Description

### Domaine

La présente description concerne de façon générale les circuits et systèmes électroniques et plus particulièrement un mécanisme d'authentification d'un circuit électronique par un autre circuit électronique. La présente description s'applique plus particulièrement à une vérification de l'authenticité d'un produit associé à un dispositif par des circuits respectivement contenus dans le produit et dans le dispositif.

### Exposé de l'art antérieur

La présence de produits, en particulier de consommables ou accessoires, non authentiques d'un dispositif constitue un problème pour le fabricant du dispositif et pour les fournisseurs autorisés des produits (consommables ou accessoires) authentiques, notamment lors de retours pour problèmes fonctionnels. Il est important de pouvoir distinguer les produits authentiques des produits non authentiques.

Les processus d'authentification ont pour rôle de vérifier que le produit, apparié au dispositif, est bien authentique ou autorisé. Pour cela, les dispositifs et les produits associés sont équipés de circuits électroniques exécutant des protocoles de vérification d'authenticité lors d'une mise en place d'un nouveau produit, à l'allumage du dispositif, périodiquement, lors d'un besoin de replacement du produit, etc.

Plus généralement, dans de nombreuses applications, lors d'un échange d'informations entre deux circuits électroniques, par exemple deux microcontrôleurs, deux ordinateurs, deux dispositifs communiquant avec ou sans fil, directement ou par l'intermédiaire d'un réseau filaire ou sans fil, on souhaite s'assurer de l'authenticité des circuits communiquant entre eux.

Le document US 9,770,915 décrit un élément remplaçable pour un dispositif hôte comportant une mémoire non volatile et de la logique. La mémoire non volatile stocke des mots de passe ou des valeurs d'authentification, et/ou des clés cryptographiques. La logique répond de façon satisfaisante à des requêtes de mots de passe un nombre maximum de fois autorisé pour authentifier l'élément remplaçable dans le dispositif hôte.

Le document US 2015/0089630 décrit une puce CRUM (surveillance d'une unité remplaçable par un consommateur), montable dans une unité consommable, un appareil de formation d'image pour authentifier la puce CRUM et le procédé correspondant.

Le document US 9,851,914 décrit un procédé et un dispositif de génération de nombres aléatoires dans une mémoire RAM ferroélectrique.

### Résumé

Un mode de réalisation pallie tout ou partie des inconvénients des processus d'authentification entre deux circuits électroniques.

Un mode de réalisation propose un processus d'authentification compatible avec diverses natures de dispositifs et de produits.

Un mode de réalisation propose une solution particulièrement adaptée à une application dans laquelle le circuit vérificateur et le circuit à vérifier sont identifiés à la fabrication.

Ainsi, un mode de réalisation prévoit un procédé d'authentification d'un premier circuit électronique par un deuxième circuit électronique, dans lequel le premier circuit génère une première valeur, à partir d'une deuxième valeur reçue du deuxième circuit et d'une troisième valeur contenue dans une première mémoire non volatile à lecture destructrice.

Selon un mode de réalisation, le premier circuit génère ladite première valeur par une fonction de dérivation.

Selon un mode de réalisation, le premier circuit communique ladite première valeur au deuxième circuit.

Selon un mode de réalisation, le premier circuit mémorise de façon non volatile la première valeur.

Selon un mode de réalisation, le deuxième circuit applique une fonction à sens unique à la première valeur.

Selon un mode de réalisation, ladite fonction à sens unique fournit, en cas d'authentification réussie, la deuxième valeur.

Selon un mode de réalisation, le deuxième circuit sélectionne ladite deuxième valeur dans un ensemble prédéfini.

Selon un mode de réalisation, chaque troisième valeur permet de générer, à sens unique, autant de premières valeurs que ledit ensemble contient de deuxièmes valeurs, les premières et deuxièmes valeurs étant liées par une fonction associative.

Selon un mode de réalisation, le premier circuit contient, dans la première mémoire, un nombre de troisièmes valeurs, inférieur au nombre de valeurs contenues dans ledit ensemble.

Selon un mode de réalisation, le premier circuit contient, dans une deuxième mémoire, ledit ensemble de deuxièmes valeurs.

Selon un mode de réalisation, le premier circuit communique ledit ensemble au deuxième circuit qui sélectionne, dans cet ensemble, ladite deuxième valeur.

Un mode de réalisation prévoit un circuit d'authentification comportant :
une première mémoire non volatile à lecture destructrice ;
au moins une sortie destinée à fournir une première valeur ; et
au moins une entrée destinée à recevoir une deuxième valeur d'un deuxième circuit,
ladite première valeur étant fonction de la deuxième valeur et d'une troisième valeur contenue dans la première mémoire non volatile à lecture destructrice.

Selon un mode de réalisation, le circuit est configuré pour la mise en oeuvre du procédé d'authentification décrit.

Un mode de réalisation prévoit un système d'authentification d'un premier circuit par un deuxième circuit, dans lequel le premier circuit comporte une mémoire non volatile à lecture destructrice.

Un mode de réalisation prévoit un système d'authentification d'un produit par un dispositif, dans lequel le produit comporte un premier circuit, le dispositif comportant un deuxième circuit tel que décrit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de système dispositif-produit du type auquel s'appliquent les modes de réalisation décrits ;
la figure 2 représente, de façon très schématique et sous forme de blocs, un mode de réalisation d'un circuit électronique du type auquel s'appliquent les modes de mise en oeuvre décrits ;
la figure 3 illustre, de façon très schématique, les contenus respectifs d'un circuit vérificateur et d'un circuit candidat ; et
la figure 4 représente, de façon très schématique, un mode de mise en oeuvre d'un procédé d'authentification d'un circuit candidat par un circuit vérificateur.

### Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation qui vont être décrits ont été représentés et seront détaillés. En particulier, les éventuels mécanismes d'échange d'informations chiffrées ou non entre les circuits électroniques n'ont pas été détaillés, les modes de réalisation décrits étant compatibles avec les mécanismes usuels.

Sauf précision contraire, lorsque l'on fait référence à deux éléments connectés entre eux, cela signifie directement connectés sans élément intermédiaire autre que des conducteurs, et lorsque l'on fait référence à deux éléments reliés ou couplés entre eux, cela signifie que ces deux éléments peuvent être directement reliés (connectés) ou reliés par l'intermédiaire d'un ou plusieurs autres éléments.

Dans la description qui suit, lorsque l'on fait référence aux termes "approximativement", "environ" et "de l'ordre de", cela signifie à 10 % près, de préférence à 5 % près.

On fera par la suite référence à un exemple d'application où le système dispositif-produit concerne les téléphones mobiles (dispositifs) et leurs batteries (produits). Toutefois, tout ce qui est décrit s'applique à tout système dispositif-produit pour lequel des problèmes similaires se posent et, plus généralement, à toute authentification d'un circuit électronique par un autre respectant les fonctionnalités décrites. De plus, on suppose pour simplifier que l'authentification est effectuée par le dispositif qui authentifie un ou plusieurs produits qu'il contient, mais tout ce qui est décrit se transpose à un fonctionnement inverse, c'est-à-dire à une authentification du dispositif (par exemple un périphérique d'accès à internet) par un produit (connexion internet) auquel le dispositif est associé.

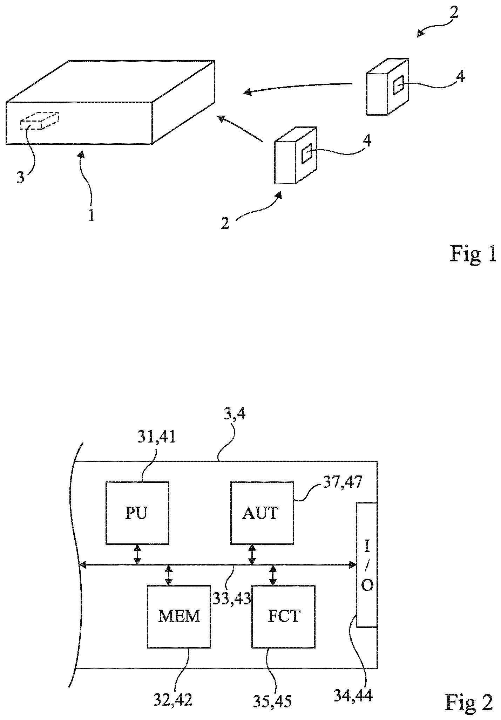

La figure 1 représente, de façon très schématique et sous forme de blocs, un exemple de système dispositif-produit du type auquel s'appliquent à titre d'exemple les modes de réalisation décrits.

On suppose que le dispositif est un téléphone 1 et que les produits sont des batteries 2 pour ce téléphone.

Afin de vérifier l'authenticité des batteries, on met en oeuvre un mécanisme d'authentification de la ou des batteries 2 par le téléphone 1, voire du téléphone par la ou les batteries. Pour cela, les téléphones 1 et les batteries 2 sont équipés de circuits électroniques, respectivement 3 et 4, capables d'échanger des informations afin de mettre en oeuvre un processus d'authentification. La communication peut s'effectuer de façon filaire ou sans fil, par exemple par communication sans contact en champ proche (NFC - Near Field Communication).

Les circuits électroniques 3 et 4 peuvent avoir d'autres fonctions comme, par exemple, une mesure du niveau de charge de la batterie et la communication peut donc également traiter d'autres processus que l'authentification. Selon les applications, l'authentification peut être effectuée, lors de la mise en place de la batterie, à chaque allumage du téléphone, avant chaque connexion au réseau, périodiquement, etc.

Pour simplifier, on fera par la suite référence à un circuit vérificateur et à un circuit candidat. Cependant, les systèmes dispositifs-produits visés par la présente description comprennent plusieurs dispositifs et plusieurs produits, donc plusieurs circuits vérificateurs similaires et plusieurs circuits candidat similaires.

La figure 2 représente, de façon très schématique et sous forme de blocs, un mode de réalisation d'un circuit électronique 3 ou 4 du type auquel s'appliquent les modes de mise en oeuvre décrits. Ce circuit peut se trouver côté vérificateur et côté candidat (circuit à vérifier).

Le circuit 3, respectivement 4, comporte :
une ou plusieurs entités de calcul 31, respectivement 41, (PU), par exemple une machine d'états, un microprocesseur, un circuit logique programmable, etc. ;
une ou plusieurs zones 32, respectivement 42, (MEM) de stockage volatil et/ou non volatil pour stocker tout ou partie des données et programmes ;
un ou plusieurs bus 33, respectivement 43, de données, d'adresses et/ou de commandes entre les différents éléments internes au circuit 3 ;
une ou plusieurs interfaces 34, respectivement 44, d'entrée-sortie (I/O) de communication avec ou sans fil avec l'extérieur du circuit 3, respectivement 4, correspondant ; et
divers autres circuits en fonction de l'application, symbolisés en figure 2 par un bloc 35, respectivement 45, (FCT).

Selon le mode de réalisation représenté, le circuit 3 ou 4 comporte en outre un circuit ou une fonction d'authentification 37 ou 47 (AUT) mettant en oeuvre un processus d'authentification d'un circuit 4 par un circuit 3, par exemple un circuit associé à une batterie par un circuit associé à un téléphone.

Les blocs 37 et 47 sont, par exemple, des processeurs dédiés exécutant le programme d'authentification de façon indépendante ou contiennent le programme et les informations requises pour une exécution par l'unité 31 ou 41.

Pour détourner les mécanismes d'authenticité, on rencontre deux catégories de circuits candidat capables de répliquer un mécanisme d'authentification alternatif.

Une première catégorie consiste en des circuits clones, c'est-à-dire des circuits en tout point identiques à un circuit authentique. Ces circuits sont généralement obtenus en reproduisant l'ensemble de la topographie (design) d'un circuit authentique, de sorte que le circuit fonctionne de la même façon.

Une deuxième catégorie de circuits non authentiques, plus répandue car plus simple à réaliser, consiste à émuler le fonctionnement d'un circuit authentique en mettant en oeuvre un programme adapté par un microprocesseur standard. Cela requiert de percer le secret du mécanisme d'authentification par des attaques cryptographiques de type par canaux cachés ou par rétroconception, mais cela reste plus simple et souvent plus accessible que de cloner le circuit (sa topographie).

Le plus souvent, il s'agit d'un mixte des deux, c'est-à-dire que, même en réalisant un circuit clone, certaines informations stockées en fin de fabrication, telles que des clés d'authentification, listes de codes, etc., sont piratées par des attaques par injection de fautes dans des circuits authentiques afin de pouvoir les intégrer dans les circuits clones.

On prévoit un mécanisme d'authentification selon lequel certaines informations sont fournies au circuit vérificateur 3 en fin de fabrication, par exemple dans une phase de personnalisation, et d'autres informations sont fournies au circuit à vérifier 4 (circuit candidat). De préférence, ces informations sont différentes, c'est-à-dire que les informations que possède le circuit vérificateur 3 ne sont pas contenues dans le circuit à vérifier 4 et inversement.

On prévoit également, côté circuit candidat 4, une mémoire non volatile effaçable lors de la lecture, c'est-à-dire que les informations contenues dans cette mémoire, qui y sont stockées lors de la personnalisation du circuit, ne sont lisibles qu'une seule fois. On pourra mettre en oeuvre cette fonction dans une mémoire non volatile reprogrammable, c'est-à-dire inclure dans l'algorithme d'authentification une étape d'effacement après lecture de la donnée lue (dès la première lecture de cette donnée). Toutefois, on préfère utiliser une mémoire spécifique ayant cette caractéristique intrinsèque dans son contrôleur afin d'éviter qu'un effacement ne soit empêché par une attaque par injection de faute. Cette mémoire « à lecture unique » ou à lecture destructrice (de la donnée lue) est par exemple incluse dans le bloc 47.

Ce que l'on cherche à éviter, ce sont les duplications des circuits candidat. En effet, en reprenant l'exemple de l'application aux téléphones et aux batteries, ce qui importe principalement est d'éviter qu'une nouvelle génération de batteries ne soit clonée, que ce soit par une duplication du circuit ou par une attaque, afin d'émuler le fonctionnement du circuit qu'elle contient.

Ainsi, une particularité du mécanisme d'authentification décrit est qu'on ne cherche pas à empêcher une attaque par injection de faute ou par canaux cachés, ni à bloquer le circuit candidat en cas d'attaque, mais à faire en sorte que de telles attaques ne permettent pas de réaliser un circuit clone fonctionnel.

Selon les modes de réalisation décrits, le mécanisme d'authentification exploite une liste de valeurs, dites publiques et une liste de valeurs, dites secrètes. Les deux listes sont de même taille (contiennent un même nombre de valeurs, de préférence différentes les unes des autres) de façon à associer une et une seule valeur secrète à chaque valeur publique. Par « publique », on entend que l'ensemble des valeurs publiques est susceptible d'être connu par les deux circuits (vérificateur et candidat) et stocké ou calculé par les deux circuits. Par « secrète », on entend que l'ensemble des valeurs secrètes n'est susceptible d'être calculé que par le circuit candidat.

Par ailleurs, les valeurs publiques et les valeurs secrètes sont liées par une fonction (associative) à sens unique (one-way function), c'est-à-dire que chaque valeur publique peut être retrouvée à partir de la valeur secrète, mais que l'inverse n'est pas vrai (connaître l'ensemble des valeurs publiques ne permet pas de calculer l'ensemble des valeurs secrètes correspondantes ou un quelconque sous-ensemble de ces valeurs secrètes). Cette fonction à sens unique est, par exemple, une fonction de hachage (hash function) cryptographique, par exemple de type SHA-2 ou SHA-3, ou une fonction de chiffrement (par exemple l'AES) appliqué à une constante (par exemple zéro) et dont la clé est la valeur secrète et le résultat est la valeur publique.

Enfin, l'ensemble des valeurs privées peut être généré à partir d'une ou plusieurs graines (seeds) par une fonction de dérivation également à sens unique. Les graines peuvent être différentes les unes des autres ou toutes les graines peuvent être identiques (une seule graine). En d'autres termes, toutes les valeurs secrètes peuvent être calculées à partir d'une fonction de dérivation utilisant une même graine et un index de la valeur secrète (il y a autant d'index ou identifiants que de valeurs secrètes). De plus, plusieurs graines différentes peuvent chacune générer ou dériver l'ensemble de valeurs secrètes. Diverses fonctions usuelles de dérivation de valeurs secrètes à partir de graines peuvent être utilisées (en cas de plusieurs graines, on utilise de préférence une fonction cryptographique « surjective », c'est-à-dire capable de générer une même valeur de sortie pour des valeurs d'entrée différentes).

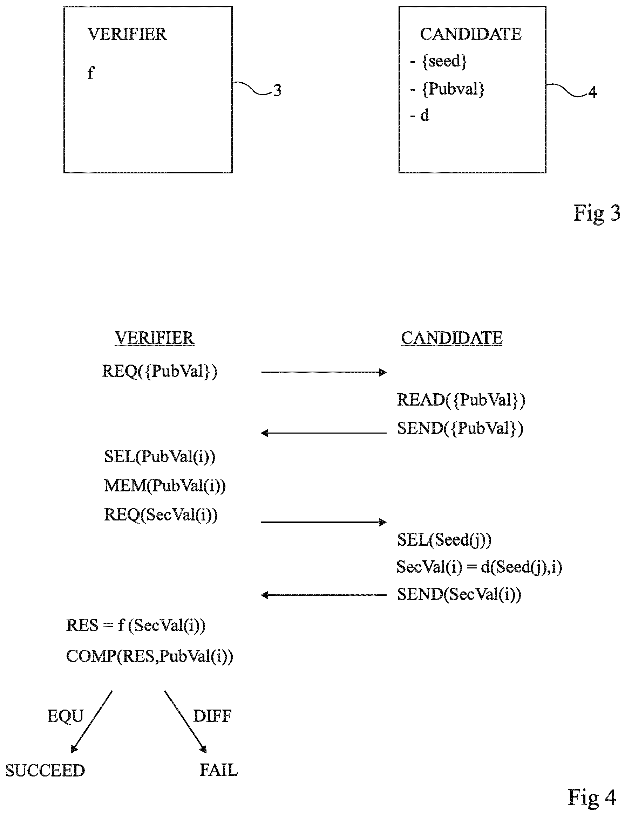

La figure 3 illustre, de façon très schématique, les contenus respectifs d'un circuit vérificateur et d'un circuit candidat.

Les circuits 3 et 4 sont des circuits électroniques du type de celui illustré en figure 2.

Une particularité du circuit 4 est que, outre des mémoires volatiles et non volatiles (pour stocker les données temporaires et les informations telles que les programmes et des données immuables), il comporte une mémoire non volatile à lecture unique, ou à lecture destructrice, c'est-à-dire dans laquelle la lecture d'une donnée efface cette donnée.

Les circuits 3 et 4 peuvent contenir divers programmes et données, mais on ne se préoccupe ici que des informations et données pour la mise en oeuvre du mécanisme d'authentification décrit.

Le (chaque) circuit 3 (VERIFIER) contient et est capable d'exécuter une fonction f à sens unique de correspondance entre valeur privée et valeur publique, c'est-à-dire qu'il ne contient de préférence ni l'ensemble {PubVal} de n valeurs publiques, ni l'ensemble {SecVal} de n valeurs secrètes, mais seulement une fonction f permettant, à partir d'une valeur secrète SecVal(i), de retomber sur la valeur publique PubVal(i) à laquelle cette valeur secrète est associée. La fonction f est, par exemple, mémorisée dans le circuit 3 lors de sa personnalisation. En variante, la fonction f permet de retrouver l'index i à partir de la valeur secrète SecVal(i).

Le (chaque) circuit 4 contient (reçoit ou détermine lors de la personnalisation des circuits) l'ensemble {PubVal} des n valeurs publiques PubVal(i), un ensemble {Seed} de m graines Seed(j) (j allant de 1 à m), et la fonction d de dérivation d'une valeur secrète SecVal(i) à partir d'une graine Seed(j) et de l'index i de la valeur secrète.

L'ensemble de valeurs secrètes {SecVal} et l'ensemble de valeurs publiques {PubVal} sont choisis par le fabricant ou par le personnaliseur des circuits (généralement le fabricant des dispositifs et des produits). De même, l'ensemble de graines {Seed} est déterminé par le fabricant ou par le personnaliseur des circuits.

L'ensemble de valeurs secrètes {SecVal} n'est chargé ni dans le circuit vérificateur, ni dans le circuit candidat. De préférence, l'ensemble de valeurs publiques {PubVal} n'est pas chargé (lors de la personnalisation des circuits) dans le circuit vérificateur 3 mais est chargé dans le circuit candidat 4. L'ensemble {Seed} de m graines est chargé (ou généré aléatoirement) uniquement dans le circuit candidat 4. Le nombre m de graines dans le circuit 4 est inférieur (par exemple dans un rapport compris entre 2 et 10) au nombre n de valeurs publiques et de valeurs privées du système. Dans le cas d'une génération aléatoire de graines par le circuit 4, on prévoit que, lors de la personnalisation du circuit 4, celui-ci communique au fabricant des dispositifs les valeurs publiques produites à partir de ces graines, afin que ces valeurs publiques puissent être stockées dans les circuits vérificateurs des dispositifs lors de leur fabrication.

En variante, le circuit vérificateur 3 contient, en mémoire non volatile, l'ensemble {PubVal} de valeurs publiques. Cependant, en aucun cas, il ne doit contenir l'ensemble {SecVal} de valeurs secrètes. Selon cette variante, le circuit candidat 4 peut ne pas contenir l'ensemble {PubVal} de valeurs publiques.

La figure 4 représente, de façon très schématique, un mode de mise en oeuvre d'un procédé d'authentification d'un circuit candidat par un circuit vérificateur.

Lorsque le circuit vérificateur 3 souhaite vérifier l'authenticité du circuit candidat 4, il lui envoie une requête (REQ({PubVal})) de l'ensemble de valeurs publiques.

Le circuit 4 extrait (READ({PubVal})) de sa mémoire non-volatile l'ensemble {PubVal} des n valeurs publiques et les envoie (SEND({PubVal})) au circuit 3.

Le circuit 3 sélectionne (SEL(PubVal(i))), par exemple, aléatoirement, une (PubVal(i)) des valeurs publiques et mémorise (MEM(PubVal(i))) au moins cette valeur publique. Cette mémorisation est, de préférence, en mémoire volatile.

Le cas échéant, le circuit 3 stocke les n valeurs publiques {PubVal} dans sa mémoire non volatile afin de pouvoir les réutiliser et économiser les deux premières étapes lors d'authentifications ultérieures.

Toutefois, selon un mode de réalisation préféré, cet ensemble {PubVal} est extrait d'un circuit 4, au moins à chaque fois qu'un nouveau produit (une nouvelle batterie ou une batterie de rechange) est introduit, afin de rendre le système compatible avec de nouvelles familles de produits pour lesquels la fonction f est toujours adaptée mais pour lesquels les ensembles de valeurs publiques {PubVal} et secrètes {SecVal} sont différents. Le fait de transférer l'ensemble de valeurs publiques {PubVal}, du circuit 4 au circuit 3, à chaque authentification, présente l'avantage de rendre le système compatible avec l'association, à un même dispositif ou circuit 3, de plusieurs produits ou circuits 4 ayant des ensembles de valeurs publiques {PubVal} et secrètes {SecVal} différents d'un circuit à un autre.

Une fois qu'il a sélectionné une valeur publique PubVal(i), le circuit 3 envoie au circuit 4 une requête (REQ(SecVal(i))) de la valeur secrète SecVal(i) correspondante. Cette requête contient au moins l'index i. En variante, la requête contient la valeur publique elle-même. L'important est que le circuit 4 puisse déterminer l'index i de la valeur secrète demandée par le circuit 3, que ce soit directement en recevant cet index ou indirectement d'après la valeur publique PubVal(i).

Le circuit 4 sélectionne (SEL(Seed(j)) alors, par exemple aléatoirement ou séquentiellement d'une authentification à une autre, une graine Seed(j) dans l'ensemble {Seed}.

Avec cette graine et l'index i communiqué par le circuit 3, le circuit 4 génère ou dérive (SecVal (i) = d(Seed(j), i)) la valeur secrète SecVal(i).

Cette valeur est envoyée (SEND(SecVal(i))) au circuit 3 qui lui applique (RES = f(SecVal(i))) la fonction f pour obtenir une valeur RES. Cette valeur RES est ensuite comparée (COMP(RES, PubVal(i))) à la valeur publique PubVal(i) mémorisée précédemment par le circuit 3.

Dans la variante où la fonction f permet de retrouver l'index i à partir de la valeur secrète SecVal(i), le circuit 3 peut se contenter de mémoriser l'index i qu'il sélectionne sans mémoriser la valeur publique PubVal(i).

Si les deux valeurs ne sont pas égales (DIFF), cela signifie que le circuit 4 n'est pas authentique et l'authentification échoue (FAIL). Si les valeurs sont égales (EQU), l'authenticité est confirmée (SUCCEED).

Les conséquences d'une authentification réussie ou ratée ne sont pas modifiées par les modes de réalisation décrits. Il peut s'agir d'un blocage du dispositif 1 et/ou du produit 2, d'une extinction du dispositif, etc. Les modes de réalisation décrits sont compatibles avec toute contremesure usuelle.

Un avantage des modes de réalisation décrits est que, même en cas d'attaque permettant de découvrir les m valeurs secrètes générées par un circuit 4, les circuits clones fabriqués ne seront pas fonctionnels car ils ne contiendront pas les n valeurs secrètes mais seulement une partie d'entre elles. On voit donc que l'on n'empêche pas la découverte, par un attaquant, des valeurs secrètes utilisées par un produit donné, mais on l'empêche de créer des circuits clones fonctionnels.

En particulier, on pourrait penser ne pas contraindre (limiter) la génération de valeurs secrètes par le circuit 4, mais compter le nombre de valeurs secrètes transmises au circuit 3 et limiter ce nombre à un seuil inférieur au nombre n. Toutefois, si un attaquant peut empêcher la mise à jour du compteur, par exemple par injection de faute, il sera à même de reconstituer l'ensemble des n valeurs secrètes et ainsi de le stocker dans ces circuits clones pour permettre leur authentification par un circuit 3 (qui demande une valeur secrète de cet ensemble).

On pourrait également penser stocker de façon non volatile l'ensemble de n valeurs secrètes dans le circuit 4 lors de sa personnalisation. Toutefois, cela n'empêcherait alors pas un attaquant de cloner cette mémoire non volatile et de disposer ainsi de l'ensemble des n valeurs secrètes.

L'utilisation d'une mémoire non volatile à lecture destructrice, combinée à une absence de stockage de toutes les valeurs secrètes, mais à l'utilisation d'une dérivation à partir de graines, permet de garantir qu'aucun circuit authentique ne génère l'ensemble complet de valeurs secrètes, même en cas d'attaques qui réussissent.

Selon une variante de réalisation, le circuit 4, bien qu'il efface les graines au fur et à mesure de leur utilisation, mémorise en mémoire non-volatile les valeurs secrètes qu'il génère à partir de ces graines. Ainsi, le circuit 4 stocke au maximum m valeurs secrètes parmi les n valeurs de l'ensemble {SecVal}. Cela permet de réutiliser ces valeurs lorsque le circuit 3 réclame une nouvelle fois une valeur secrète déjà générée. Ainsi, le nombre d'authentifications n'est pas limité à m, mais peut être plus grand. Cela peut servir, par exemple, à engendrer et mémoriser un sous-ensemble de m valeurs publiques côté circuit 3 et un sous-ensemble de m valeurs publiques correspondantes côté circuit 4, et de les réutiliser. Ainsi, on ne limite pas le nombre d'authentifications, sans pour autant générer l'ensemble des valeurs secrètes, donc sans nuire à l'avantage qu'un circuit clone ne pourra pas fonctionner car il ne pourra pas connaître ou générer les m valeurs secrètes. Selon cette variante, chaque valeur secrète générée est mémorisée en mémoire non-volatile du circuit 4, par exemple avant son envoi au circuit 3. Par ailleurs, un test est de préférence ajouté, côté circuit 4, avant l'extraction d'une nouvelle graine, pour vérifier que la valeur secrète demandée n'est pas déjà présente dans sa mémoire non volatile. Ainsi, on ne réduit pas la taille du sous-ensemble de valeurs secrètes générées.

Le mode de réalisation de la figure 4 est un mode de réalisation simplifié pour exposer les principes de l'authentification réalisée. Les calculs et les échanges pourront s'accompagner de toute mesure de protection par ailleurs usuelle, par exemple un chiffrement symétrique ou asymétrique des transmissions entre les circuits 3 et 4, une authentification par signature des transmissions, etc. Par ailleurs, l'ordre des étapes de mémorisation et d'envoi par un même circuit (par exemple l'ordre des étapes (MEM(PubVal(i))) et (REQ(SecVal(i)))) pourra être inversé ou ces étapes peuvent être effectuées en parallèle.

A titre d'exemple particulier de réalisation, le nombre de valeurs publiques et secrètes est de l'ordre de plusieurs dizaines ou quelques centaines et le nombre m de graines est de l'ordre de la dizaine ou de quelques dizaines, pourvu de rester inférieur au nombre n.

Divers modes de réalisation ont été décrits. Diverses modifications apparaîtront à l'homme de l'art. En particulier, bien que l'on ait fait référence à une authentification d'une batterie par un téléphone, une authentification inverse est également possible. En outre, la mise en oeuvre pratique des modes de réalisation qui ont été décrits est à la portée de l'homme du métier en utilisant les indications fonctionnelles données ci-dessus.

## Revendications

1. Procédé d'authentification d'un premier circuit électronique (4) par un deuxième circuit électronique (3), dans lequel le premier circuit génère une première valeur (SecVal(i)), à partir d'une deuxième valeur (i ; PubVal(i)) reçue du deuxième circuit et d'une troisième valeur (Seed(j)) contenue dans une première mémoire non volatile (47) à lecture destructrice.

2. Procédé selon la revendication 1, dans lequel le premier circuit génère ladite première valeur (SecVal(i)) par une fonction de dérivation (d).

3. Procédé selon la revendication 1 ou 2, dans lequel le premier circuit (4) communique ladite première valeur (SecVal(i)) au deuxième circuit (3).

4. Procédé selon l'une quelconque des revendications 1 à 3, dans lequel le premier circuit (4) mémorise de façon non volatile la première valeur (SecVal(i)).

5. Procédé selon l'une quelconque des revendications 1 à 4, dans lequel le deuxième circuit (3) applique une fonction à sens unique (f) à la première valeur (SecVal(i)).

6. Procédé selon la revendication 5, dans lequel ladite fonction à sens unique (f) fournit, en cas d'authentification réussie, la deuxième valeur (i ; PubVal(i)).

7. Procédé selon l'une quelconque des revendications 1 à 6, dans lequel le deuxième circuit (3) sélectionne ladite deuxième valeur (PubVal(i)) dans un ensemble ({PubVal}) prédéfini.

8. Procédé selon la revendication 7, dans lequel chaque troisième valeur (Seed(j)) permet de générer, à sens unique, autant de premières valeurs (SecVal(i)) que ledit ensemble contient de deuxièmes valeurs ({PubVal}), les premières et deuxièmes valeurs étant liées par une fonction associative.

9. Procédé selon la revendication 7 ou 8, dans lequel le premier circuit (4) contient, dans la première mémoire, un nombre (m) de troisièmes valeurs (Seed(j)), inférieur au nombre (n) de valeurs contenues dans ledit ensemble.

10. Procédé selon l'une quelconque des revendications 7 à 9, dans lequel le premier circuit (4) contient, dans une deuxième mémoire (42), ledit ensemble ({PubVal}) de deuxièmes valeurs (PubVal(i)).

11. Procédé selon l'une quelconque des revendications 7 à 10, dans lequel le premier circuit (4) communique ledit ensemble ({PubVal}) au deuxième circuit (3) qui sélectionne, dans cet ensemble, ladite deuxième valeur (PubVal(i)).

12. Circuit d'authentification (3, 4) comportant :
une première mémoire non volatile à lecture destructrice (47) ;
au moins une sortie destinée à fournir une première valeur (SecVal(i)) ;
au moins une entrée destinée à recevoir une deuxième valeur (i ; PubVal(i)),
ladite première valeur étant fonction de la deuxième valeur et d'une troisième valeur (Seed(j)) contenue dans la première mémoire non volatile (47) à lecture destructrice.

13. Circuit selon la revendication 12, configuré pour la mise en oeuvre du procédé selon l'une quelconque des revendications 1 à 11.

14. Système d'authentification d'un premier circuit (4) par un deuxième circuit (3), dans lequel le premier circuit comporte une mémoire non volatile à lecture destructrice (47).

15. Système selon la revendication 14, dans lequel le premier circuit (4) est conforme à la revendication 12 ou 13.

16. Système d'authentification d'un produit (2) par un dispositif (1), dans lequel le produit comporte un premier circuit (4) d'un système selon la revendication 14 ou 15, le dispositif comportant un deuxième circuit (3) d'un système selon la revendication 14 ou 15.
